# EUROPEAN PATENT SPECIFICATION

(11) **EP 0 798 344 B1**
(45) Date of publication and mention of the grant of the patent: **09.08.2000**
(21) Application number: 97104915.0
(22) Date of filing: 22.03.1997
(51) Int. Cl.: C08L 83/08

(54) **Fluorosilicone rubber composition and method of adhering it to a substrate**
Fluorsiliconkautschukzusammensetzung und Verfahren zum Verkleben mit einem Substrat
Composition d'élastomère de fluorosilicone et procédé pour son adhésion à un substrat

(30) Priority: 29.03.1996 JP 10426596
(43) Date of publication of application: 01.10.1997
(73) Proprietor: Dow Corning Toray Silicone Company, Limited, Tokyo 103 (JP)
(72) Inventor: Irie, Masakazu, Ichihara-shi, Chiba Prefecture (JP)
(74) Representative: Fleischer, Sabine, Dr.

(56) References cited:
- EP-A- 0 061 871
- EP-A- 0 458 617
- EP-A- 0 589 386
- DATABASE WPI Week 9444 Derwent Publications Ltd., London, GB; AN 94-354929 XP002043264 & JP 06 279 732 A (ASAHI GLASS CO., LTD.) , 4 October 1994

## Description

The present invention is a fluorosilicone rubber composition that possesses excellent curability and adhesiveness on various substrate materials. In a separate embodiment, we provide a method of adhering said composition with the use of a specific primer.

Fluorosilicone rubber, which has a main component of an organopolysiloxane that contains perfluoroalkyl groups, possesses properties resistant to heat, frost, chemical, and oil. These compositions find wide application in automotive and aircraft industries. However, a disadvantage of fluorosilicone rubber is that it does not adhere well to substrates made of metal, synthetic rubber, and the like. Therefore, various methods are proposed for improving adhesion of fluorosilicone rubbers to these and other surfaces.

For example, Japanese Patent Publication 1-38149 provides a method for adhering fluorosilicone rubber to a metal surface by contacting such a composition with a metal surface that has been treated with a primer composition containing vinyltrimethoxysilane and 2,4,4-trimethyl-pentyl-2-hydroperoxide. This composition is then heated and cured. A disadvantage of this method is the cost of the primer composition because it contains a specific organic peroxide. Another disadvantage is the non-uniform adhesion of the fluorosilicone rubber to the substrate.

As a result, we performed studies aimed at the elimination of the aforementioned disadvantages. It has now been found that a fluorosilicone rubber composition in combination with a specific polyorganohydrogensiloxane demonstrates excellent adhesion to substrates. This property is further improved when the composition is additionally combined with a specific primer. Heating and curing of fluorosilicone rubber composition then provides for strong adhesion to various substrates.

Therefore, it is an object of this invention to provide a fluorosilicone rubber composition which, in combination with a specific primer, acquires excellent curability and adhesion to various substrate materials, especially metals. It is also an object of the invention to provide an adhering method for use with said composition.

The present invention is a fluorosilicone rubber composition comprising: (A) 100 parts by weight of a polyorganosiloxane which has a degree of polymerization greater than 1000 and the average unit formula RₐSiO_{(4-a)/2}, where R is a substituted or non-substituted monovalent hydrocarbon group, 20 to 50 mole% of the R substituents are 3,3,3-trifluoropropyl and a is a number within the range of 1.95 to 2.05; (B) 5 to 200 parts by weight of a silica filler; (C) 0.01 to 10 parts by weight of a polyorganohydrogensiloxane comprising 0.8 weight percent or greater of silicon-bonded hydrogen atoms; and (D) 0.1 to 10 parts by weight an organic peroxide.

This invention also provides a method for adhering said fluorosilicone rubber composition to a substrate by contacting the composition with a substrate previously treated with a primer composition comprising an organoalkoxysilane containing alkenyl groups, and by then heating and curing said composition.

The polyorganosiloxane, component (A), of our composition is represented by the average unit formula R_{*a*}SiO_{(4-a)/2}, where R is a substituted or non-substituted monovalent hydrocarbon group; 20 to 50 mole%, preferably 40 to 50 mole%, of the R substituents are 3,3,3-trifluoropropyl. In addition to trifluoropropyl, R is selected from a C₁ to C₆ alkyl group; a vinyl or allyl group; and a phenyl group.

For efficient crosslinking, it is recommended that component (A) preferably comprise 0.01 to 2 mole% of vinyl groups bonded to silicon. Furthermore, to improve heat resistance and to facilitate cure it is recommended that methyl groups preferably be used in addition to 3,3,3-trifluoropropyl groups and vinyl groups. In the above formula, a is a number within the range of 1.95 to 2.05. To impart sufficient mechanical strength to our fluorosilicone rubber after cure, it is recommended that the degree of polymerization of component (A) be greater than 1000, and preferably greater than 3000. The polyorganosiloxane of (A) is represented, for example, by a copolymer of dimethylsiloxy units and (3,3,3-trifluoropropyl) methylsiloxy units; a copolymer of dimethylsiloxy units, (3,3,3-trifluoropropyl)methylsiloxy units, and vinylmethylsiloxy units; a copolymer of (3,3,3-trifluoropropyl)methylsiloxy units and vinylmethylsiloxy units; and poly(3,3,3-trifluoropropyl)methylsiloxane. The terminal group on the molecular chains of component (A) are selected from a trimethylsiloxy group, vinyldimethylsiloxy group, dimethylhydroxysiloxy group, and (3,3,3-trifluoropropyl)methylhydroxysiloxy group.

The silica filler, component (B), is represented by fillers conventionally used for silicone rubbers such as precipitated silica, silica aerogel, and fumed silica. It is preferable that this filler have a pH below 9. Furthermore, for obtaining a sufficient reinforcement effect, the filler must have a specific surface area greater than 50 m²/g. The filler amount is from 5 to 200 parts by weight, and preferably 20 to 80 parts by weight, per 100 parts by weight of component (A). If the amount of the filler exceeds 200 parts by weight, the fluorosilicone rubber will lose its mechanical properties after processing and curing.

The polyorganohydrogensiloxane, component (C), of the present invention is required for improving curability and adhesion to various substrates. The amount of hydrogen atoms bonded to silicon atoms in component (C) is 0.8 weight percent or greater, and preferably 1.2 weight percent or greater. If the amount of silicon-bonded hydrogen atoms silicon-bonded atoms of component (C) is less than 0.8 weight percent, the adhesion to the substrate will be impaired.

In component (C), groups other than silicon-bonded hydrogen atoms are represented by substituted or non-substituted monovalent hydrocarbon groups such as C₁ to C₆ alkyl groups; vinyl or allyl groups; aryl group such as phenyl; and 3,3,3-trifluoropropyl. Component (C) normally has a linear or cyclic molecular structure, but it can also be partially branched or three-dimensional.

It is recommended that component (C) have a degree of polymerization greater than 5 and preferably within the range of 10 to 150.

The following are Examples of polyorganohydrogensiloxanes useful in the present invention are: polymethylhydrogensiloxane; a copolymer of methylhydrogensiloxy units and dimethylsiloxy units; and a copolymer of methylhydrogensiloxy units, dimethylsiloxy units, and (3,3,3-trifluoropropyl)methylsiloxy units. Terminal groups of the molecular chain of component (C) are represented by a trimethylsiloxy group or a dimethylhydrogensiloxy group. It is recommended that the amount of component (C) be within the range of 0.01 to 10 parts by weight, per 100 parts by weight of component (A). If component (C) is present at less than 0.01 parts by weight, it is not impossible to improve curing and adhesion properties. If, the amount of component (C) exceeds 10 parts by weight, the mold release properties of the cured composition are impaired.

The organic peroxide, component (D), of the present invention is any commercial compound such as benzoyl peroxide, di-tertiary-butyl peroxide, tertiary-butyl per-benzoate, dicumyl peroxide, and 2,5-dimethyl-2,5-di-(tertiary butyloxy)hexane. This component may also be formed into a paste by dispersing in a silicone oil. It is recommended that component (D) be used in an amount of 0.1 to 10 parts by weight, preferably 0.5 to 2.0 parts by weight, per 100 parts by weight of component (A).

Our claimed composition comprises components (A) through (D). If necessary, however, this composition is combined with the following additives: plasticizers such as diorganosiloxane oligomers normally used with silicone rubber compositions; metal soaps or processing aids; iron oxide, titanium oxide, magnesium oxide, magnesium carbonate or oil resistance improvers; quartz, diatomaceous earth, calcium carbonate, or similar fillers. The diorganosiloxane oligomers which are used as plasticizers are polymers which do not contain the polyorganohydrogensiloxane of component (C) and which have a viscosity below 500 mPa·s at 25°C. Specific examples of diorganosiloxane oligomers are: (3,3,3-trifluoropropyl)methylsiloxane oligomer having both molecular terminals end-blocked with dimethylhydroxysiloxy groups, or a dimethylsiloxane oligomer having both terminals end-blocked with dimethylhydroxysiloxy groups. These oligomers are used in an amount of 0.1 to 40 parts by weight per 100 parts by weight of component (B).

When component (A) is poly(3,3,3-trifluoropropyl)methylsiloxane, our claimed composition may also be combined with an organopolysiloxane which has a degree of polymerization greater than 1,000 and which does not contain 3,3,3-trifluoropropyl groups. Organic groups which are bonded to silicon atoms in the polyorganosiloxane are represented by C₁ to C₆ alkyl groups; vinyl or allyl; and phenyl. The following are specific examples of these polyorganosiloxanes: polydimethylsiloxane, polyvinylmethylsiloxane, a copolymer of dimethylsiloxy units and methylphenylsiloxy units, and a copolymer of dimethylsiloxy units and vinylmethylsiloxy units. It is recommended that the polyorganosiloxanes be used in such an amount that, after compounding, the content of 3,3,3-trifluoropropyl groups in relation to all monovalent hydrocarbon groups bonded to silicon atoms be at least 20 mole%.

The present composition is prepared by uniformly mixing components (A) through (D), with appropriate additives when necessary, in conventional mixing equipment such as a two-roll kneader-mixer. It is possible to premix components (A) and (B) by mixing them under heating conditions to obtain a silicone rubber base compound which is then combined with components (C) and (D).

The following is a description of our method for adhering the claimed composition to various substrates. This method comprises contacting a fluorosilicone rubber composition comprising components (A) through (D) with a substrate treated with a primer composition having a main component in the form of an organoalkoxysilane that contains alkenyl groups, and then heating and curing. Suitable organoalkoxysilanes with alkenyl groups are vinyltrimethoxysilane, vinylmethyldimethoxysilane, vinyltriethoxysilane, vinyl(tris(β-methoxyethoxy))silane, allyl trimethoxysilane, allyltriethoxysilane, allylmethyldiethoxysilane, as well as the condensation products of their partial hydrolysis.

Other components of the primer compositions include organic titanium acid esters, organic solvents, and platinum compounds. Useful organic titanium esters are: tetraisopropyl titanate, tetra-(n-propyl) titanate, tetra-(n-butyl) titanate, tetra-(2-ethylhexyl) titanate, dibutyl diisopropyl titanate, triethanolamine titanate, ethylene glycol titanate, bis-(acetylacetone)diisopropoxy titanium, bis (ethylacetyl-acetonate) diisopropoxy titanium, and tetra (trimethylsiloxy) titanate. The organic solvents are represented by toluene, xylene, benzene, n-heptane, n-hexane, and trichloroethylene. The following are examples of the platinum compounds: platinum black, platinum tetrachloride, a complex of chloroplatinic acid and an olefin, and a complex of chloroplatinic acid and a vinylmethylsiloxane.

Curing of our claimed composition, with simultaneous attachment thereof to the substrate surface, is performed by spreading the primer composition over the substrate, drying said primer composition in air for at least 30 minutes, contacting the fluorosilicone rubber composition with the surface of a substrate, and then heating and adhering to the substrate under a pressure of 100 to 250 kgf/cm² applied for 5 to 20 minutes at a temperature within a range of 170 to 190°C.

As a result of our method, the fluorosilicone rubber composition of this invention cures and adheres strongly to the surfaces of various substrates such as iron, steel, stainless steel, aluminum, nickel, zinc, copper and their alloys; acrylic resins; phenolic resins; epoxy resins; alkali-treated Teflon™ films; glass and ceramics.

The invention is now further described by reference to specific examples. In the examples, all parts are given as parts by weight and the values for viscosity are as measured at 25°C.

Example 1. A kneader-mixer was loaded with 100 parts by weight of polyorganosiloxane having both terminals end-blocked with dimethylhydroxysiloxy groups and having a degree of polymerization (dp) of 6,000. The polyorganosiloxane comprised 95.5 mole% of (3,3,3-trifluoropropyl)methylsiloxy units and 0.5 mole% of vinylmethylsiloxy units. Forty parts by weight of aerosol silica (pH 4.3) having a specific surface area of 200 m²/g was added to the mixer. The contents of the mixer was then combined with 8 parts of (3,3,3-trifluoropropyl)methylsiloxane oligomer having a viscosity of 30 mPa·s at 25°C and end-blocked with dimethylhydroxysiloxy groups. The components were mixed for 2 hours at 50°C. The mixture was thereafter heat treated for 2 hours at 120°C, whereby volatile polyorganosiloxanes and water were removed, and a fluorosilicone rubber base compound was obtained. This compound was next combined with 0.5 part of polymethylhydrogensiloxane end-blocked with trimethylsiloxy groups and having a dp of 25 (amount of silicon-bonded hydrogen atoms equalled 1.50 wt%), and 0.3 part of 2,5-dimethyl-2,5-di-(tertiary-butylperoxy) hexane. These components were uniformly mixed on a two roll mill, thereby forming a curable fluorosilicone rubber composition.

A primer composition was then prepared by uniformly mixing 94 parts of n-heptane, 4 parts of allyltrimethoxysilane, 1.5 parts of tetra-(n-butyl) titanate, and 0.5 part of chloroplatinic acid. An adhesive Teflon™ tape was adhered to both ends on one side of a 6 cm long by 2.5 cm wide stainless steel plate. The primer composition was next applied onto the central portion of the plate, not coated with the Teflon™ tape; and the coating was subsequently dried for 60 minutes at room temperature. After drying of the primer composition, the fluorosilicone rubber composition was applied onto the entire surface of the stainless steel plate in an amount that formed a 2 mm thick coating. The resulting product was then heated at 170°C under a pressure of 200 kgf/cm² for 10 minutes.

As a result, the coating layer was cured, and an adhesion test specimen was prepared. After the Teflon™ tape was peeled off, the fluorosilicone rubber remained adhered only to the central part of the specimen which was coated with primer composition. While the non-adhered portion of the fluorosilicone rubber was held by the hand, it was pulled up with a force perpendicular to the stainless steel plate surface; and the conditions of peeling the adhered portion of fluorosilicone rubber were observed. The degree of breaking was measured as a ratio of the broken area to the entire surface area of adhesion. From these measurements (Table 1) the curing adhesion capacity was evaluated in accordance with the following four categories:
I - 100% breaking through the adhesive layer (100% of the rupture occurred in the rubber layer).
II - 50 to 99% of the rupture occurred through the adhesive layer
III - 0 to 49% of the rupture occurred through the adhesive layer
IV - 100% peeling occurred at the interface surface.

Example 2. A fluorosilicone rubber composition was prepared as in Example 1, with the exception that a polymethylhydrogensiloxane, having both molecular terminals end-blocked with trimethylsiloxy groups and a dp of 150 (the silicon-bonded hydrogen atoms were in an amount of 1.65 wt%) was used instead of the polymethylhydrogensiloxane of Example 1. The resultant composition was tested with regard to both curing and adhesive properties. The results are given in Table 1.

Example 3. A fluorosilicone rubber composition was prepared as in Example 1, with the exception that a polymethylhydrogensiloxane, having both molecular terminals end-blocked with trimethylsiloxy groups and a dp of 10 (the silicon-bonded hydrogen atoms were in an amount of 1.25 wt%) was used instead of the polymethylhydrogensiloxane of Example 1. The product composition was tested with regard to curing and adhesive properties. The results are in Table 1.

Example 4. Adhesion test specimens were prepared by the same method as Example 1, with the exception that an aluminum plate was used instead of stainless steel. The specimens were tested with regard to curing and adhesion as in Example 1. The results showed that 100% of rupture occurred through the adhesive layer (i.e., 100% rupture in the rubber layer).

Example 5. A fluorosilicone composition was prepared as in Example 1, with the exception that the polymethylhydrogensiloxane was not used. The composition was tested with regard to curing and adhesion with results shown in Table 1.

Example 6. A fluorosilicone rubber composition was prepared as in Example 1, with the exception that a copolymer comprising dimethylsiloxy units and methyl hydrogensiloxy units, end-blocked with trimethylsiloxy groups and having a dp of 10 (the silicon-bonded hydrogen atoms were in an amount of 0.75 wt%), was used instead of the polymethylhydrogensiloxane. The composition was tested with regard to curing and adhesive properties, and results are listed in Table 1.

Comparative Example 7. A fluorosilicone rubber composition was prepared as in Example 1, with the exception that a copolymer comprising dimethylsiloxy units and methylhydrogensiloxy units, end-blocked with trimethylsiloxy groups, and having a dp of 10 (the silicon-bonded hydrogen atoms were in an amount of 0.32 wt%) was used instead of the polymethylhydrogensiloxane. The obtained composition was tested with regard to curing and adhesive properties. The results are in Table 1.

**Table 1**

| Example No. | Degree of Polymerization of Polyorganohydrogensiloxane (Si-H wt%) | Adhesion |
|---|---|---|
| 1 | 25(1.50%) | I |
| 2 | 150 (1.65%) | I |
| 3 | 10 (1.25%) | II |
| 5 | - | IV |
| 6 | 10 (0.75%) | III |
| 7 | 10 (0.32%) | IV |
| I - 100% breaking through the adhesive layer (100% of the rupture occurred in the rubber layer). | | |
| II - 50 to 99% of the rupture occurred through the adhesive layer. | | |
| III - 0 to 49% of the rupture occurred through the adhesive layer. | | |
| IV - 100% peeling occurred through the interface surface. | | |

## Claims

1. A fluorosilicone rubber composition comprising:
(A) 100 parts by weight of a polyorganosiloxane having a degree of polymerization greater than 1000 and an average unit formula of RₐSiO_{(4-a)/2}, where R is a substituted or non-substituted monovalent hydrocarbon group and 20 to 50 mole% of the R substituents are 3,3,3-trifluoropropyl group, and a is a number within the range of 1.95 to 2.05;
(B) 5 to 200 parts by weight of a silica filler;
(C) 0.01 to 10 parts by weight of a polyorganohydrogensiloxane comprising 0.8 weight percent or greater of silicon-bonded hydrogen atoms; and
(D) 0.1 to 10 parts by weight of an organic peroxide.

2. The fluorosilicone rubber composition of Claim 1, wherein component (A) has 40 to 50 mole% of the R substituents as 3,3,3-trifluoropropyl and the remaining R substituents are selected from vinyl or methyl.

3. The fluorosilicone rubber composition of Claim 1, wherein component (A) has 0.01 to 2 mole% of the R substituents as vinyl.

4. The fluorosilicone rubber composition of Claim 1, where the silica filler has a surface area greater than 50 m²/g and is selected from the group consisting of precipitated silica, silica aerogel, and fumed silica.

5. The fluorosilicone rubber composition of Claim 1, where component (C) is a polyorganohydrogensiloxane having a degree of polymerization within a range of 10 to 150.

6. The fluorosilicone rubber composition of Claim 1, where the organic peroxide is selected from the group consisting of benzoyl peroxide, di-tertiary-butyl peroxide, tertiary-butyl perbenzoate, dicumyl peroxide, and 2,5-dimethyl-2,5-di-(tertiary-butyloxy)hexane.

7. The fluorosilicone rubber composition of Claim 1 further comprising a plasticizer consisting of 0.1 to 40 parts by weight, per 100 parts by weight of component (B), of a diorganosiloxane oligomer having a viscosity less than 500 mPa·s at 25°C and having no hydrogen atoms bonded to silicon atoms.

8. The fluorosilicone rubber composition of claim 1, where component (A) is poly(3,3,3-trifluoropropyl)methylsiloxane and said composition further comprises in admixture with component (A) an organosiloxane having a degree of polymerization greater than 1,000 and containing no 3,3,3-trifluoropropyl groups and the content of 3,3,3-trifluoropropyl groups in relation to all monovalent hydrocarbon groups bonded to silicon in the admixture is at least 20 mole percent.

9. A method of adhering a fluorosilicone rubber composition to a substrate comprising:
(A) drying on the surface of a substrate a primer composition comprising an organoalkyoxysilane comprising alkenyl groups,
(B) contacting the primed surface of the substrate with the fluorosilicone rubber composition of claim 1; and
(C) curing the fluorosilicone rubber composition.

10. The method according to Claim 9, where the organoalkoxysilane comprising alkenyl groups is selected from the group consisting of vinyltrimethoxysilane, vinyl(tris(β-methoxyethoxy))silane, allyltrimethoxysilane, allyltriethoxysilane, and allylmethyldiethoxysilane.

11. The method according to Claim 9 where the primer composition further comprises components selected from the group consisting of organic titanium acid esters or compounds and complexes of platinum.

## Patentansprüche

1. Fluorsiliconkautschukzusammensetzung, enthaltend:
(A) 100 Gewichtsteile eines Polyorganosiloxans mit einem Polymerisationsgrad von größer als 1000 und einer durchschnittlichen Einheitsformel RₐSiO_{(4-a)/2}, worin R eine substituierte oder nichtsubstituierte monovalente Kohlenwasserstoffgruppe ist und 20 bis 50 Mol-% der R-Substituenten eine 3,3,3-Trifluorpropylgruppe sind und a eine ganze Zahl innerhalb des Bereichs von 1,95 bis 2,05 ist,
(B) 5 bis 200 Gewichtsteile eines Siliciumdioxidfüllstoffs,
(C) 0,01 bis 10 Gewichtsteile eines Polyorganowasserstoffsiloxans, das 0,8 Gew.-% oder mehr siliciumgebundene Wasserstoffatome enthält, und
(D) 0,1 bis 10 Gewichtsteile eines organischen Peroxids.

2. Fluorsiliconkautschukzusammensetzung nach Anspruch 1, worin Komponente (A) 40 bis 50 Mol-% der R-Substituenten als 3,3,3-Trifluorpropyl besitzt und die verbleibenden R-Substituenten aus Vinyl oder Methyl ausgewählt sind.

3. Fluorsiliconkautschukzusammensetzung nach Anspruch 1, worin Komponente (A) 0,01 bis 2 Mol-% der R-Substituenten als Vinyl besitzt.

4. Fluorsiliconkautschukzusammensetzung nach Anspruch 1, wobei der Siliciumdioxidfüllstoff eine Oberfläche von mehr als 50 m²/g aufweist und ausgewählt ist aus der Gruppe, bestehend aus gefällter Kieselsäure, Kieselaerogel und pyrogener Kieselsäure.

5. Fluorsiliconkautschukzusammensetzung nach Anspruch 1, wobei Komponente (C) ein Polyorganowasserstoffsiloxan mit einem Polymerisationsgrad innerhalb eines Bereichs von 10 bis 150 ist.

6. Fluorsiliconkautschukzusammensetzung nach Anspruch 1, wobei das organische Peroxid ausgewählt ist aus der Gruppe, bestehend aus Benzoylperoxid, Di-t-butylperoxid, t-Butylperbenzoat, Dicumylperoxid und 2,5-Dimethyl-2,5-di-(t-butyloxy)hexan.

7. Fluorsiliconkautschukzusammensetzung nach Anspruch 1, die weiterhin einen Weichmacher enthält, der aus 0,1 bis 40 Gewichtsteilen pro 100 Gewichtsteile Komponente (B) eines Diorganosiloxanoligomers mit einer Viskosität von weniger als 500 mPa·s bei 25°C besteht und keine an Siliciumatome gebundene Wasserstoffatome aufweist.

8. Fluorsiliconkautschukzusammensetzung nach Anspruch 1, wobei Komponente (A) Poly(3,3,3-trifluorpropyl)methylsiloxan ist und diese Zusammensetzung weiterhin in Mischung mit Komponente (A) ein Organosiloxan mit einem Polymerisationsgrad von größer als 1000 und ohne 3.3,3-Trifluorpropylgruppen enthält und der Gehalt von 3,3,3-Trifluorpropylgruppen in Relation zu allen monovalenten Kohlenwasserstoffgruppen, die in der Mischung an Silicium gebunden sind, mindestens 20 Mol-% beträgt.

9. Verfahren zur Anhaftung einer Fluorsiliconkautschukzusammensetzung an ein Substrat, umfassend:
(A) Trocknen einer Primerzusammensetzung, die ein Organoalkoxysilan mit Alkenylgruppen enthält, auf der Oberfläche eines Substrats,
(B) Inberührungbringen der mit dem Primer versehenen Oberfläche des Substrats mit der Fluorsiliconkautschukzusammensetzung nach Anspruch 1 und
(C) Härten der Fluorsiliconkautschukzusammensetzung.

10. Verfahren nach Anspruch 9, wobei das alkenylgruppenhaltige Organoalkoxysilan ausgewählt ist aus der Gruppe, bestehend aus Vinyltrimethoxysilan, Vinyl(tris(β-methoxyethoxy))silan, Allyltrimethoxysilan, Allyltriethoxysilan und Allylmethyldiethoxysilan.

11. Verfahren nach Anspruch 9, wobei die Primerzusammensetzung weiterhin Komponenten enthält, die aus der Gruppe ausgewählt sind, die aus organischen Titansäureestern oder Verbindungen und Komplexen von Platin besteht.

## Revendications

1. Une composition de caoutchouc de fluorosilicone comprenant :
(A) 100 parties en poids d'un polyorganosiloxane ayant un degré de polymérisation supérieur à 1000 et une formule moyenne de motifs RₐSiO_{(4-a)/2}, où R est un radical hydrocarboné monovalent substitué ou non substitué et 20 à 50 mol % des substituants R sont des groupes 3,3,3-trifluoropropyle, et a est un nombre compris dans l'intervalle de 1,95 à 2,05 ;
(B) 5 à 200 parties en poids d'une charge de silice ;
(C) 0,01 à 10 parties en poids d'un polyorganohydrogénosiloxane comprenant 0,8 pour cent en poids ou plus d'atomes d'hydrogène liés au silicium ; et
(D) 0,1 à 10 parties en poids d'un peroxyde organique.

2. La composition de caoutchouc de fluorosilicone de la revendication 1, dans laquelle 40 à 50 mol % des substituants R du composant (A) sont des groupes 3,3,3-trifluoropropyle et les substituants R restants sont choisis parmi les groupes vinyle et méthyle.

3. La composition de caoutchouc de fluorosilicone de la revendication 1, dans laquelle 0,01 à 2 mol % des substituants R du composant (A) sont des groupes vinyle.

4. La composition de caoutchouc de fluorosilicone de la revendication 1, dans laquelle la charge de silice a une surface spécifique supérieure à 50 m²/g et est choisie dans la classe formée par une silice précipitée, un aérogel de silice et une silice de fumée.

5. La composition de caoutchouc de fluorosilicone de la revendication 1, dans laquelle le composant (C) est un polyorganohydrogénosiloxane ayant un degré de polymérisation compris dans un intervalle de 10 à 150.

6. La composition de caoutchouc de fluorosilicone de la revendication 1, dans laquelle le peroxyde organique est choisi dans la classe formée par le peroxyde de benzoyle, le peroxyde de di-*tert*-butyle, le perbenzoate de *tert*-butyle, le peroxyde de dicumyle et le 2,5-diméthyl-2,5-di(*tert*-butyloxy)hexane.

7. La composition de caoutchouc de fluorosilicone de la revendication 1, comprenant de plus un plastifiant qui consiste en 0,1 à 40 parties en poids, pour 100 parties en poids de composant (B), d'un oligomère de diorganosiloxane ayant une viscosité inférieure à 500 mPa.s à 25°C et n'ayant pas d'atomes d'hydrogène liés à des atomes de silicium.

8. La composition de caoutchouc de fluorosilicone de la revendication 1, dans laquelle le composant (A) est un poly(3,3,3-trifluoropropyl)méthylsiloxane et ladite composition comprend de plus, en mélange avec le composant (A), un organosiloxane ayant un degré de polymérisation supérieur à 1000 et ne contenant pas de groupes 3,3,3-trifluoropropyle, et la teneur en groupes 3,3,3-trifluoropropyle par rapport à la totalité des groupes hydrocarbonés monovalents liés au silicium dans le mélange est d'au moins 20 moles pour cent.

9. Un procédé pour faire adhérer une composition de caoutchouc de fluorosilicone à un substrat, qui consiste à :
(A) sécher, sur la surface d'un substrat, une composition d'apprêt comprenant un organoalcoxysilane comprenant des groupes alcényles,
(B) mettre en contact la surface apprêtée du substrat avec la composition de caoutchouc de fluorosilicone de la revendication 1 ; et
(C) durcir la composition de caoutchouc de fluorosilicone.

10. Le procédé selon la revendication 9, dans lequel l'organoalcoxysilane comprenant des groupes alcényles est choisi dans la classe formée par le vinyltriméthoxysilane, le vinyl(tris(β-méthoxyéthoxy))silane, l'allyltriméthoxysilane, l'allyltriéthoxysilane et l'allylméthyldiéthoxysilane.

11. Le procédé selon la revendication 9, dans lequel la composition d'apprêt comprend de plus des composants choisis dans la classe formée par des esters organiques d'acides contenant du titane ou des composés et complexes de platine.
